# EUROPÄISCHE PATENTSCHRIFT

(11) **EP 3 554 968 B1**
(45) Veröffentlichungstag und Bekanntmachung des Hinweises auf die Patenterteilung: **27.11.2024**
(21) Anmeldenummer: 17818536.9
(22) Anmeldetag: 15.12.2017
(51) Int. Cl.: B65G 23/08, F16D 1/10

(54) **FÖRDERROLLE MIT REIB- UND/ODER STOFFSCHLÜSSIGER KUPPLUNGSBUCHSE**
CONVEYING ROLLER WITH FRICTIONALLY FITTING AND/OR INTEGRAL COUPLING BUSHING
ROULEAU DE MANUTENTION DOTÉ D'UNE DOUILLE D'ACCOUPLEMENT ENTRAÎNÉE PAR FRICTION ET/OU PAR CONTINUITÉ DE MATIÈRE

(30) Priorität: 16.12.2016 DE 102016124689
(43) Veröffentlichungstag der Anmeldung: 23.10.2019
(73) Patentinhaber: Interroll Holding AG, 6592 Sant'Antonino (CH)
(72) Erfinder: LINDEMANN, Harry, 42929 Wermelskirchen (DE); LANGENSIEPEN, Dominik, 42929 Wermelskirchen (DE); WEICHBRODT, Reinhold, 42929 Wermelskirchen (DE)
(74) Vertreter: Kohlhof, Stephan
(86) Internationale Anmeldenummer: PCT/EP2017/083025
(87) Internationale Veröffentlichungsnummer: WO 2018/109165

(56) Entgegenhaltungen:
- EP-A1- 2 466 730
- DE-A1- 102015 120 922
- DE-U1- 20 319 969
- DE-U1- 8 212 286
- JP-A- 2009 022 082
- JP-A- 2015 214 379
- US-A1- 2004 108 189
- US-A1- 2011 062 000
- US-B1- 6 286 659

## Beschreibung

Die Erfindung betrifft eine motorbetriebene Förderrolle für Förderanlagen zum Fördern von Behältern, Paletten und dergleichen, mit einem Rollenkörper, dessen Außenumfangsfläche eine Auflagefläche für Fördergut darstellt, eine Antriebseinheit, die innerhalb eines Innenraumes des Rollenkörpers angeordnet ist, und einer zur Übertragung eines Drehmoments von der Antriebseinheit auf eine Innenumfangsfläche des Innenraumes des Rollenkörpers ausgebildete Kupplungseinheit, welche eine Kupplungsbuchse aufweist, die einen Antriebsabschnitt, der mit der Antriebseinheit in Verbindung steht, und einen äußeren peripheren Abtriebsabschnitt aufweist.

Motorbetriebene Förderrollen dieser Bauart werden für unterschiedliche Zwecke in logistischen Anwendungen eingesetzt. So können sie beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. Dabei werden solche motorbetriebenen Förderrollen regelmäßig in Förderstrecken eingesetzt, die aus mehreren nebeneinander angeordneten Rollen bestehen, deren obere Umfangsfläche jeweils zur Aufnahme des Förderguts dient. In diesen Förderstrecken sind einerseits Leerlaufrollen angeordnet, die antriebslos sind und lediglich in einem Fördergestell drehbar gelagert sind. Weiterhin sind in diesen Förderstrecken angetriebene Förderrollen angeordnet, die motorbetrieben sind und durch eine elektrische Antriebseinheit in Rotation versetzt werden. Diese motorbetriebenen Förderrollen sind solcherart aufgebaut, dass die Antriebseinheit innerhalb der Rolle selbst angeordnet ist, sodass keine außerhalb des Rollenkörpers angeordneten mechanischen Komponenten erforderlich sind, um die Rotation der Rolle zu erzeugen. Die motorbetriebenen Förderrollen dienen einerseits dazu, unmittelbar über die äußere Umfangsfläche ihres Rollenkörpers das Fördergut zu transportieren, andererseits können mittels einer Übertragung der Rotation der motorbetriebenen Förderrolle auf eine oder mehrere Leerlaufrollen mittels eines Übertragungselementes, beispielsweise eines Riemenantriebs, durch die motorbetriebene Förderrolle auch die Leerlaufrollen in Rotation versetzt werden, um auch über deren äußere Umfangsfläche das Fördergut anzutreiben.

Aus EP 1 656 312 B1 ist eine motorbetriebene Förderrolle bekannt, bei der die Antriebseinheit innerhalb der Förderrolle angeordnet ist. Diese motorbetriebenen Förderrolle weist eine Andruckeinheit auf, welche eine erste und eine zweite Scheibe umfasst, die außenumfänglich eine V-Form definieren, in die ein elastischer Anpressring eingelegt ist. Die beiden Scheiben können mittels einer Zentralschraube auf eine konische Antriebswelle der Antriebseinheit geschoben und zusammengepresst werden. Dabei wird zwischen einer der beiden Scheiben eine kraftschlüssig drehmomentfeste Verbindung zur Antriebswelle hergestellt und zugleich der Anpressring aus einem Zustand, in dem er sich in den Innenumfang des Rollenkörpers einführen lässt, in einem gespannten Zustand zusammengepresst, in dem der Anpressring nach radial außen verformt ist, sodass er einen Presssitz sowohl zu den beiden konischen Spannflächen der Scheiben, welche die V-Form ausbilden, als auch zur Innenumfangsfläche des Rollenkörpers ausbildet. Durch diese kraftschlüssige Kopplung wird das Antriebsmoment der Antriebseinheit auf den Rollenkörper übertragen.

Bei dieser Art hat sich gezeigt, dass die Geräuschentwicklung hoch sein kann. Daher wurde eine demgegenüber verbesserte Förderrolle in DE 20 2012 005 380 U1 vorgeschlagen, bei der zur Übertragung eines Drehmoments von der Antriebseinheit auf eine Innenumfangsfläche des Innenraums des Rollenkörpers eine Kupplungseinheit vorgesehen ist, welche eine Spannbuchse, einen zu der Spannbuchse axial beweglichen Spannring, ein Befestigungselement zum Halten einer axialen Lage des Spannrings zu der Spannbuchse in einer gespannten Position und einen Anpressring, der zwischen einer Spannfläche der Spannbuchse und einer Spannfläche des Spannrings in der gespannten Position festgesetzt ist und in der gespannten Position außenumfänglich im Reibschluss mit der Innenumfangsfläche des Innenraums des Rollenkörpers ist. Dabei weist die Spannbuchse des Kupplungselements einen inneren Hohlraum auf, und das Befestigungselement ist radial auswärts von diesem Hohlraum angeordnet.

Zwar haben sich beide Lösungen als gut geeignet zur Übertragung von Drehmomenten herausgestellt, allerdings besteht ein Problem darin, dass insbesondere bei schwankenden Toleranzen die Vorspannung zu hoch sein kann, sodass sich an der Außenfläche des Rollenkörpers eine Auswölbung ergibt. Dies ist im Betrieb von Rollen höchst unerwünscht.

Darüber hinaus besteht ein Problem bei geschmierten motorbetriebenen Förderrollen darin, dass der Reibschluss durch einen Ölfilm verschlechtert werden kann. Zwar ist es möglich bei bzw. vor der Montage den Rollenkörper von innen zu reinigen, aber eine dauerhafte Ölfreiheit auch im Betrieb kann so nicht erreicht werden.

Weiterhin wurde gemäß DE 10 2015 120 922 A1 eine Lösung vorgeschlagen, bei der ein Energieübertragungselement eingesetzt wird, welches ein Verbindungselement, ein Zwischenelement und ein Eingriffselement aufweist. Das Verbindungselement hat einen ringförmigen Bereich. Die äußere periphere Fläche des ringförmigen Bereichs ist mit bogenförmigen Bereichen versehen, und die innere periphere Fläche des ringförmigen Bereichs ist mit konkav-konvexen Bereichen versehen. Das Eingriffselement weist Vorsprünge und ein Schaft-Einführungsloch auf. Die bogenförmigen Bereiche des Verbindungselements sind in Kontakt mit der inneren peripheren Fläche des Rollenkörpers, und das Verbindungselement und der Rollenkörper sind ebenfalls mittels einer Sicherungseinrichtung miteinander sicher verbunden. Das Zwischenelement kommt in Eingriff mit den konkav-konvexen Bereichen und den Vorsprüngen, das Schaft-Einführungsloch des Eingriffselements wird in der Mitte des Rollenkörpers gehalten, und eine Antriebseinheit kommt in Eingriff mit dem Schaft-Einführungsloch. Zur Übertragung von Drehmomenten sind nun einzelne Vorsprünge oder Stifte vorgesehen, die sich radial von der peripheren inneren Oberfläche des Rollenkörpers erstrecken und in die Ausnehmungen des Verbindungselements eingreifen können. Im Rahmen des Prüfungsverfahrens ist die Erteilungsbehörde davon ausgegangen, dass DE 10 2015 120 922 A1 die Merkmale des Oberbegriffs der Ansprüche 1 und 13 offenbart

Aufgrund des formschlüssigen Eingriffs zwischen Antrieb und Rollenkörper wird zwar das Problem des Verformens des Rollenkörpers aufgrund einer überhöhten Pressung vermieden, allerdings ist die Konstruktion sehr aufwendig. Zudem müssen bei der Fertigung enge Toleranzen eingehalten werden, wodurch Kosten verursacht werden. Ferner ergibt sich auch bei der Wartung ein Problem, nämlich dann, wenn die formschlüssige Verbindung defekt ist. Bei einer klemmenden Verbindung, wie sie ebenfalls aus dem Stand der Technik bekannt ist, kann hier einfach nachgestellt werden, wohingegen bei der formschlüssigen Verbindung ein Austausch der Teile erforderlich ist.

Aus dem europäischen Prüfungsverfahren ist ferner folgender Stand der Technik bekannt: DE 10 2015 120922 A1, JP 2015 214379 A und DE 203 19 969 U1.

Aufgabe der vorliegenden Erfindung ist es daher, eine Förderrolle der eingangs genannten Art anzugeben, die bezüglich der Konstruktion vereinfacht ist und bei der eine sichere Drehmomentenübertragung von dem Antrieb auf die Förderrolle auch bei weiten Toleranzen ohne Verformung des Rollenkörpers möglich ist.

Die Aufgabe wird durch eine motorbetriebene Förderrolle gemäß Anspruch 1 gelöst. Ferner wird die Aufgabe durch eine motorbetriebene Förderrolle nach Anspruch 13 gelöst.

In Abkehr vom Stand der Technik, bei dem einerseits eine umfängliche reibschlüssige Verbindung vorgesehen war oder andererseits eine formschlüssige Verbindung, schlägt die vorliegende Erfindung vor, eine punktuelle reibschlüssige Verbindung oder eine punktuelle stoffschlüssige Verbindung zu verwenden. Sowohl reibschlüssige als auch stoffschlüssige Verbindungen sind in der Konstruktion gegenüber formschlüssigen wesentlich vereinfacht. Sie lassen gegenüber formschlüssigen Verbindungen wesentlich höhere Toleranzen zu, wodurch die Fertigungskosten verringert sind. Eine punktuelle reibschlüssige Verbindung ist gegenüber einer umfänglichen reibschlüssigen Verbindung ebenfalls vereinfacht, da auch diese höhere Toleranzen zulässt. Dadurch wird das Problem einer überhöhten Pressung aufgrund von mangelnden Toleranzen vermieden und die Fertigung so insgesamt vereinfacht und die Förderrolle kostengünstiger herstellbar.

Eine punktuelle reibschlüssige Verbindung, wie sie die Erfindung vorschlägt hat darüber hinaus den Vorteil, dass auf der Innenumfangsfläche des Rollenkörpers vorhandenes Öl leichter verdrängt werden kann. Es ist also erfindungsgemäß möglich auch bei ölgeschmierten Förderrollen eine wirksame reibschlüssige Verbindung zu erzielen, ohne dass eine aufwändige Entfettung durchgeführt wird, oder der Reibschluss im Betrieb nachlässt.

Der Erfindung liegt die Erkenntnis zugrunde, dass bei motorbetriebenen Förderrollen keine sehr hohen Momente übertragen werden müssen und daher auch eine punktuelle reibschlüssige Verbindung im Gegensatz zu einer umfänglichen reibschlüssigen Verbindung, die eine wesentlich höhere Fläche für die Momentenübertragung bereitstellt, ausreichend ist. Hierdurch lässt sich der Vorteil der punktuellen reibschlüssigen Verbindung, insbesondere das Ausgleichen von Fertigungstoleranzen, nutzen, wodurch die Fertigung vereinfacht ist. Einen ähnlichen Vorteil bietet auch die stoffschlüssige Verbindung, da auch diese Fertigungstoleranzen ausgleichen kann, wenn sie punktuell ausgebildet ist. Daher sind beide Varianten gleichermaßen bevorzugt und lösen dasselbe Problem.

Gemäß einer ersten bevorzugten Ausführungsform weist der Abtriebsabschnitt der Kupplungsbuchse eine Mehrzahl an radialen Nasen auf, die dazu vorgesehen sind, mit der Innenumfangsfläche des Rollenkörpers in Kontakt zu stehen. Die Nasen bilden auf diese Weise Kontaktpunkte, an denen eine punktuelle reibschlüssige Verbindung zwischen Kupplungsbuchse und Rollenkörper hergestellt wird. Die Nasen sind vorzugsweise im Querschnitt abgerundet ausgebildet und/oder weisen eine leicht trapezförmige Form auf, die am radial äußeren Ende ein leichtes Plateau ausbildet. Die Nasen weisen bevorzugt eine Außenkontur auf, die in etwa teilzylindrisch ist und sich in axialer Richtung wenigstens teilweise, vorzugsweise vollständig, über die Kupplungsbuchse erstreckt.

Vorzugsweise definieren die radialen Nasen gemeinsam einen Durchmesser, der größer ist als der Durchmesser der Innenumfangsfläche. Hierdurch wird eine besonders gute reibschlüssige Verbindung zwischen Kupplungsbuchse und Rollenkörper erreicht, da die Nasen gemeinsam ein Übermaß definieren und die Kupplungsbuchse so unter Vorspannung in den Rollenkörper eingesetzt ist.

Hierzu sind die Nasen vorzugsweise nachgiebig ausgebildet. Eine nachgiebige Ausbildung der Nasen begrenzt die radial wirkende Kraft, die von der Kupplungsbuchse auf den Rollenkörper wirkt, wodurch ein Verformen des Rollenkörpers effektiv vermieden werden kann.

Vorzugsweise sind die Nasen innerlich hohl ausgebildet. Hierdurch ist es möglich, die Nasen radial zu stauchen, um so eine Nachgiebigkeit zu erzielen. Die Nasen können beispielsweise als Blechabschnitte ausgebildet sein, die federnd wirken, um in radialer Richtung eine Anpresskraft auf den Rollenkörper auszuüben, um so eine reibschlüssige Verbindung zwischen Kupplungsbuchse und Rollenkörper zu erzeugen. Insbesondere bei diesem Aspekt ist bevorzugt, dass die Nasen eine bekannte Federkonstante aufweisen, die vordefiniert eingestellt ist. Hierdurch ist es möglich, auch bei gewissen Toleranzabweichungen eine in einem definierten Bereich liegende radiale Anpresskraft vorzusehen, die hoch genug ist, um eine Drehmomentenübertragung von der Kupplungsbuchse auf den Rollenkörper zu erreichen, Öl zu verdrängen, aber gleichzeitig ein Verformen des Rollenkörpers zu vermeiden.

Gemäß einer weiteren bevorzugten Ausführungsform ist der Abtriebsabschnitt mit der Innenumfangsfläche des Rollenkörpers verschweißt. Erfindungsgemäß ist diese Verschweißung nur an bestimmten Punkten vorgesehen, um die punktuell wirkende stoffschlüssige Übertragung von Drehmomenten von der Kupplungsbuchse auf den Rollenkörper zu ermöglichen. Vorzugsweise ist der Abtriebsabschnitt mittels Punktschweißen mit der Innenumfangsfläche des Rollenkörpers verbunden. Rollenkörper sind üblicherweise mit einer Zinkschicht versehen, die bei hohem Wärmeeintrag beschädigt wird. Beim Punktschweißen ist der Wärmeeintrag sehr gering. Hierdurch wird ein stoffschlüssiges Verbinden der Kupplungsbuchse mit dem Rollenkörper ermöglicht, ohne die Gefügetopologie oder die visuelle Erscheinung der Verzinkung an der Außenseite des Rollenkörpers zu verändern. Dies wird insbesondere durch den minimalen Energie- und somit Wärmeeintrag während einer Punktschweißung erreicht. Bevorzugt ist insbesondere Laser-Punkt-Schweißen, da hierbei der Energie- und Wärmeeintrag besonders gering gehalten werden kann.

Beispielsweise ist eine Punktschweißverbindung im Bereich der radialen Nasen vorgesehen. Aufgrund der Vorspannung liegen die radialen Nasen permanent an der Innenumfangsfläche an, sodass sich diese Abschnitte besonders für die stoffschlüssige Verbindung mittels Punktschweißen eignen. Auch bei gewissen Maßabweichungen ist an diesen Abschnitten eine gute Anlage zwischen Kupplungsbuchse und Innenumfangsabschnitt erreicht, die ein Punktschweißen erlaubt.

In einer weiteren bevorzugten Ausführungsform sind um einen Umfang des Abtriebsabschnitts 3 bis 20, vorzugsweise 5 bis 15, besonders bevorzugt 7 bis 10 separate Verbindungspunkte vorgesehen, an denen die Kupplungsbuchse punktuell mit der Innenumfangsfläche des Rollenkörpers verbunden ist. Es hat sich herausgestellt, dass eine Anzahl im Bereich von 3 bis 20 und besonders bevorzugt 7 bis 10 Verbindungspunkten ausreichend ist, um eine gute Drehmomentenübertragung zu erzielen und gleichzeitig auch axial, senkrecht auf die Rotationsachse des Rollenkörpers wirkende Kräfte aufzunehmen. Bezogen auf die oben beschriebene bevorzugte Ausführungsform bedeutet dies, dass 3 bis 20 Nasen und/oder 3 bis 20 Schweißpunkte vorgesehen sind. Die einzelnen separaten Verbindungspunkte sind vorzugsweise gleichmäßig um den Umfang verteilt. Die genaue Anzahl ist abhängig von den zu übertragenden Drehmomenten und auch dem Durchmesser des Rollenkörpers zu bestimmen.

Gemäß der Erfindung ist vorgesehen, dass die Kupplungsbuchse zwei- oder mehrteilig ist und ein radial äußeres Teil aufweist, welches den Abtriebsabschnitt bildet, und ein radial inneres Teil, welches einen Teil einer Welle-Nabe-Verbindung bildet und mit einer Abtriebswelle des Antriebs verbunden ist, auf. Indem das innere Teil einen Teil einer Welle-Nabe-Verbindung bildet, ist es besonders einfach mit der Abtriebswelle des Antriebs verbindbar. Beispielsweise weist die Abtriebswelle des Antriebs ein Mehrkantprofil auf, und das innere Teil der Kupplungsbuchse weist einen Innenmehrkant auf, der mit dem Außenmehrkant der Abtriebswelle des Antriebs korrespondiert. Weitere bevorzugte Welle-Nabe-Verbindungen sind Nut-Passfeder-Verbindungen, Klemmverbindungen und dergleichen. Auch eine gezahnte Verbindung ist denkbar und bevorzugt. Vorzugsweise ist in dieser Ausführungsform das innere Teil mit dem äußeren Teil verbunden, um so eine Drehmomentenübertragung von dem inneren Teil auf das äußere Teil zu gewährleisten. Es kann vorgesehen sein, dass das innere und das äußere Teil elastisch miteinander verbunden sind, um einen Antriebsruck, andere Stöße oder Schwingungen auszugleichen.

Das radial äußere Teil ist in einer bevorzugten Ausführungsform als gewellter Blechstreifen, in einer besonders bevorzugten Ausführungsform aus einem Federstahl ausgebildet. Ein solcher gewellter Blechstreifen kann beispielsweise auf einer im Wesentlichen zylindrischen Umfangsfläche des inneren Teils aufgesetzt sein. Vorzugsweise ist das radial äußere Teil vorgespannt auf die Umfangsfläche aufgesetzt und im in den Rollenkörper eingepressten Zustand derart verpresst, dass das radial äußere Teil sowohl mit der Umfangsfläche des inneren Teils als auch mit dem Rollenkörper reibschlüssig verbunden ist, um ein Drehmoment von dem radial inneren Teil über das radial äußere Teil auf den Rollenkörper übertragen zu können.

Zusätzlich hierzu ist es auch bevorzugt eine beispielsweise formschlüssige Verdrehsicherung zum Sichern des radial äußeren Teils gegen Rotation relativ zum radial inneren Teil vorzusehen. Eine solche Verdrehsicherung kann eine gewisse Rotation erlauben, solange sie nach einer bestimmten Drehung (insbesondere wenigen Grad) greift und die weitere Drehung verhindert. Die Verdrehsicherung soll insbesondere dann greifen, wenn eine reibschlüssige Verbindung zwischen innerem und äußerem Teil nicht ausreicht, beispielsweise bei hohen zu übertragenden Drehmomenten.

In einer Ausführungsform ist die Verdrehsicherung als Anschlag ausgebildet, gegen den ein umfänglicher Endabschnitt des radial äußeren Teils anschlägt. Die Verdrehsicherung wirkt in diesem Fall formschlüssig. Alternativ oder zusätzlich ist auch eine stoffschlüssig wirkende Verdrehsicherung denkbar und bevorzugt. Beispielsweise kann das radial äußere Teil mittels eines oder mehrerer Schweißpunkte an dem radial inneren Teil befestigt werden. Auch ist denkbar, dass das radial äußere Teil mittels einer Verstiftung mit dem radial inneren Teil formschlüssig verbunden ist.

Gemäß der Erfindung ist vorgesehen, dass das radial innere Teil aus einem flexiblen Material, insbesondere einem Elastomermaterial gebildet ist. Hierdurch ist die Welle-Nabe-Verbindung zwischen dem inneren Teil und der Abtriebswelle des Antriebs in Drehrichtung elastisch, sodass ein Ruck oder andere Belastungen abgefedert werden können. Ein weiterer Vorteil ist auch hierbei die Fertigungstoleranz, da elastische Bauteile durch ihre Materialeigenschaften Fertigungstoleranzen besser ausgleichen können als starre Elemente.

In einer vorteilhaften Ausgestaltung ist die Kupplungsbuchse bezogen auf die Antriebseinheit axial verschieblich gelagert. Bevorzugt ist auch die Nabe axial verschieblich gelagert. Es ist vorzugsweise keine zusätzliche axiale Fixierung, wie etwa eine stirnseitige Schraube zur Fixierung der Nabe vorgesehen. Bevorzugt ist wenigstens die Nabe mittels eines axialen Loslagers auf der Abtriebswelle des Antriebs gelagert, oder die Kupplungsbuchse ist mittels eines axialen Loslagers auf der Nabe gelagert. Hierdurch wird eine axiale Relativverschiebung zwischen Kupplungsbuchse und Antriebseinheit erlaubt. Dies ist einerseits bevorzugt, um Toleranzen auszugleichen, andererseits wird dies durch die Verbindung zwischen Kupplungsbuchse und Rollenkörper ermöglicht.

Gemäß einer weiteren Ausführungsform weist die Kupplungsbuchse eine zentrale Ausnehmung auf, in die eine Abtriebswelle des Antriebs eingesetzt ist, wobei die zentrale Ausnehmung wechselseitig umfänglich sich radial erstreckende Vorsprünge und Ausnehmungen aufweist. Die Ausnehmung kann in dem inneren Teil der Kupplungsbuchse ausgebildet sein und einen Teil der Welle-Nabe-Verbindung bilden. Die Ausnehmung ist vorzugsweise als Durchgangsöffnung ausgebildet. Die zentrale Ausnehmung weist gemäß dieser Ausführungsform im Querschnitt eine im Wesentlichen sternförmige Kontur auf, wodurch weiterhin die Fertigungstoleranzen ausgeglichen werden können. Das innere Teil bzw. die Kupplungsbuchse ist aufgrund der sternförmig ausgebildeten inneren Ausnehmung leicht flexibel und ist somit in der Lage, geringe Fertigungstoleranzen auszugleichen. Ein weiterer Vorteil liegt darin, dass die sternförmige Kontur auch zum formschlüssigen Übertragen von Drehmomenten von der Abtriebswelle des Antriebs auf die Kupplungsbuchse verwendet werden kann.

In einer bevorzugten Weiterbildung sind die Vorsprünge an den radial innerlichen Spitzen konkav abgeflacht. Hierdurch lässt sich eine Anlage an im Wesentlichen zylindrischen Abschnitten einer Abtriebswelle des Antriebs erreichen.

Vorzugsweise weist die Kupplungsbuchse im Bereich der radialen Vorsprünge axiale Ausnehmungen auf. Die axialen Ausnehmungen erstrecken sich teilweise in axialer Richtung durch die Kupplungsbuchse, vorzugsweise erstrecken sich die Ausnehmungen vollständig durch die Kupplungsbuchse. Besonders bevorzugt weisen die Ausnehmungen im Querschnitt eine im Wesentlichen trapezförmige Form auf. Vorzugsweise ist der Querschnitt der Ausnehmungen korrespondierend zu dem Querschnitt der Vorsprünge, sodass sich zwischen der Ausnehmung in dem Vorsprung und der zentralen Ausnehmung eine in etwa gleichmäßige Wandstärke ergibt. Durch derartige Ausnehmungen werden eine Gewicht- und Materialeinsparungen erzielt, und die Vorsprünge werden weiter flexibel gebildet und sind in der Lage, einen Ruck oder andere Belastungsspitzen abzufedern.

Weiterhin ist bevorzugt, dass die seitlichen Flanken der radialen Vorsprünge im Wesentlichen radial ausgerichtet sind. Hierdurch bieten die Flanken der radialen Vorsprünge Anlageflächen für die Drehmomentenübertragung, und eine Kraft von der Abtriebswelle des Antriebs auf die Kupplungsbuchse wirkt senkrecht auf die Flanke der Vorsprünge, wenn der Antrieb die Kupplungsbuchse antreibt.

Erfindungsgemäß weist die Kupplungsbuchse einen sich axial erstreckenden Kragen auf, an dem der Abtriebsabschnitt ausgebildet ist. Der axial sich erstreckende Kragen erstreckt sich axial weg vom inneren Teil und ist vorzugsweise an dem äußeren Teil ausgebildet. Der Kragen weist vorzugsweise einen Durchmesser auf, der größer ist als der Durchmesser des axial benachbarten Abschnitts der Kupplungsbuchse. Auch hierdurch werden Fertigungstoleranzen weiter ausgeglichen. Diese Ausführungsform ist besonders dann bevorzugt, wenn der Abtriebsabschnitt stoffschlüssig mit dem Rollenkörper verbunden wird. Der axial sich erstreckende Kragen kann in diesem Fall aus einem dünnen Blechabschnitt gebildet sein, welcher auf einfache Art und Weise mittels Punktschweißen, insbesondere durch eine Laser-Punkt-Schweißung, mit dem Rollenkörper verbindbar ist.

Nachstehend wird die Erfindung anhand von Ausführungsbeispielen näher erläutert.

Dabei zeigen:
- Fig. 1: einen Querschnitt durch eine Förderrolle;
- Fig. 2: einen vergrößerten Querschnitt der Förderrolle aus Fig. 1;
- Fig. 3: einen Querschnitt gemäß Fig. 2 von einem ersten Ausführungsbeispiel;
- Fig. 4: eine Seitenansicht einer Kupplungsbuchse gemäß dem ersten, nicht beanspruchten, Beispiel;
- Fig. 5: einen Querschnitt A-A gemäß Fig. 4;
- Fig. 6: das Detail A aus Fig. 4;
- Fig. 7: das Detail B aus Fig. 4;
- Fig. 8: eine perspektivische Ansicht einer Kupplungsbuchse gemäß einem zweiten Ausführungsbeispiel;
- Fig. 9: eine Seitenansicht einer Kupplungsbuchse gemäß einem dritten Ausführungsbeispiel;
- Fig. 10: eine perspektivische Ansicht einer Nabe für die Kupplungsbuchsen gemäß Fig. 2 und 4 bis 9;
- Fig. 11: einen Schnitt durch die Nabe gemäß Fig. 10;
- Fig. 12: eine perspektivische Ansicht einer Kupplungsbuchse gemäß dem ersten Ausführungsbeispiel;
- Fig. 13: einen Schnitt durch die Kupplungsbuchse aus Fig. 12;
- Fig. 14: eine perspektivische Ansicht einer Kupplungsbuchse gemäß einem vierten Ausführungsbeispiel samt Nabe gem. Fig. 10; und
- Fig. 15: eine weitere perspektivische Ansicht der Kupplungsbuchse gemäß dem vierten Ausführungsbeispiel.

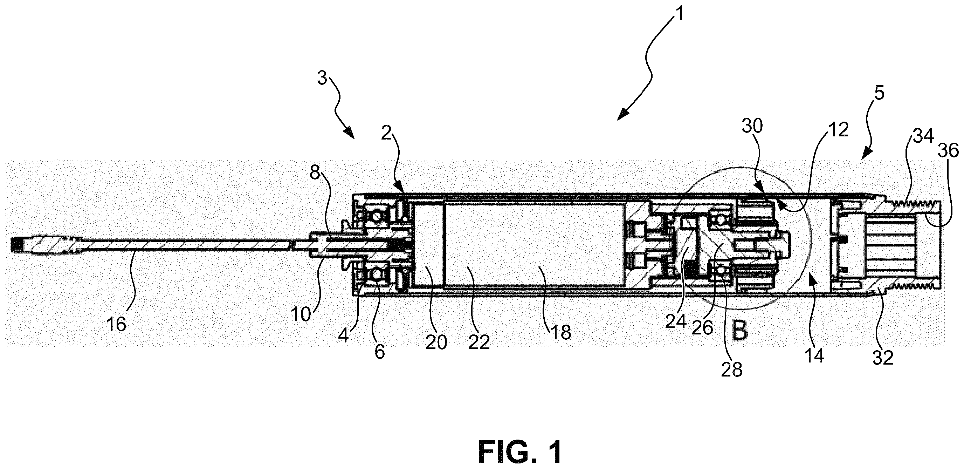

Fig. 1 zeigt den grundsätzlichen Aufbau einer motorbetriebenen Förderrolle 1 nach der Erfindung. In dem Rollenkörper 2 ist an einem ersten Ende 3 eine mit dem Rollenkörper 2 fest verbundene Endkappe 4 eingesetzt, innerhalb derer ein Wälzlager 6 angeordnet ist.

Das Wälzlager 6 dient zur drehbaren Lagerung eines Lagerzapfens 8. Der Lagerzapfen 8 ist an einem nach außen weisenden Ende mit einem Außengewinde versehen, auf dem eine Mutter 10 aufgeschraubt ist und mit Hilfe derer der Lagerzapfen 8 drehmomentenfest in einer Öffnung eines Gestells befestigt werden kann. Das Gestell wird dabei zwischen der Mutter (nicht gezeigt) und einer auf dem Gewinde 10 einwärts von der Mutter festgesetzten Hülse geklemmt.

Der Rollenkörper 2 weist eine innere Umfangsfläche 12 auf, die einen Innenraum 14 in dem Rollenkörper 2 radial äußerlich begrenzt.

Der Lagerzapfen 8 ist hohl ausgeführt, und durch die Innenbohrung des Lagerzapfens 8 werden Versorgungs- und Steuerleitungen 16 zu einer im Inneren angeordneten Antriebseinheit 18 geführt. Die Antriebseinheit 18 ist innerhalb des Rollenkörpers 2 angeordnet und drehmomentenfest mit dem Lagerzapfen 8 verbunden. Die Antriebseinheit 18 weist an ihrem zum Lagerzapfen 8 weisenden Ende eine Steuerelektronik 20 zur Ansteuerung eines elektrischen Antriebsmotors 22 auf, der vorzugsweise als bürstenloser, dreiphasiger Gleichstrommotor mit Innenläufer ausgeführt ist. Der Antriebsmotor 22 ist zwischen der Steuerungselektronik 20 und einem Planetengetriebe 24 in der Antriebseinheit 18 angeordnet, welches an dem von dem Lagerzapfen 8 wegweisenden Ende der Antriebseinheit 18 angeordnet ist.

Das Planetengetriebe 24 weist eine Abtriebswelle 26 auf, die wiederum in einem Rollenlager 28 gelagert ist.

Zum Übertragen von Drehmomenten von der Abtriebswelle 26 auf den Rollenkörper 2 weist die Förderrolle 1 eine Kupplungseinheit 30 auf, die nachstehend näher erläutert werden wird. Infolge der Übertragung von Drehmomenten von der Abtriebswelle 28 über die Kupplungseinheit 30 auf den Rollenkörper 2 dreht sich der Rollenkörper infolgedessen mit dem Antriebsdrehmoment relativ zu dem Lagerzapfen 8 und der Antriebseinheit 18.

An dem dem Lagerzapfen 8 gegenüberliegenden Ende 5 des Rollenkörpers 2 ist ein Kopfstück 32 drehmomentenfest in den Rollenkörper 2 eingesetzt. Dieses Kopfstück 32 trägt mehrere W-förmige Umfangsnuten 34, mittels derer die Rotation und das Drehmoment der Förderrolle 1 auf benachbarte Leerlaufrollen übertragen werden kann. Innerhalb des Kopfstücks 32 ist eine Aufnahme 36 für eine Wälzlagerung für die Lagerung der Förderrolle 1 an einem endseitigen Lagerzapfen (nicht gezeigt) ausgebildet.

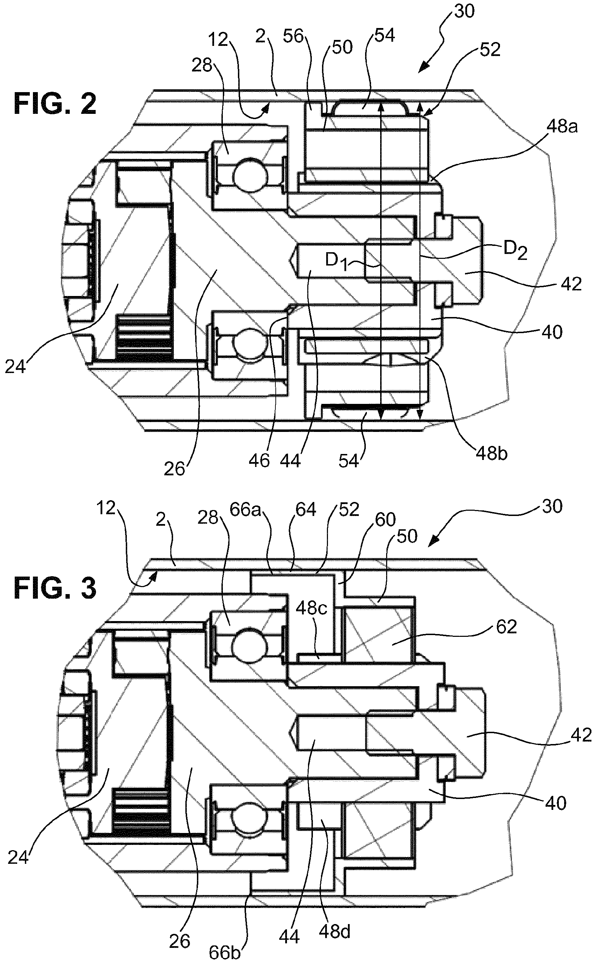

Fig. 2 zeigt nun den Ausbruch B aus Fig. 1 in vergrößerter Darstellung. Zu sehen ist die Kupplungseinheit 30, die auf der Abtriebswelle 26 montiert ist. Die Kupplungseinheit 30 weist zunächst eine Nabe 40 auf, die mittels einer Schraube 42 gegen die Abtriebswelle 26 montiert ist. Dazu weist die Abtriebswelle 26 eine Sacklochbohrung 44 auf, die mit einem Innengewinde versehen ist. Die Nabe 40 liegt mit einem Stirnende 46 gegen das Rollenlager 28, wenn sie wie in der dargestellten Ausführung mit der Schraube 42 axial auf der Abtriebswelle 26 fixiert ist.

Radial äußerlich weist die Nabe 40 eine im Wesentlichen zylindrische Grundform auf, die mit radialen Vorsprüngen 48a, 48b versehen ist.

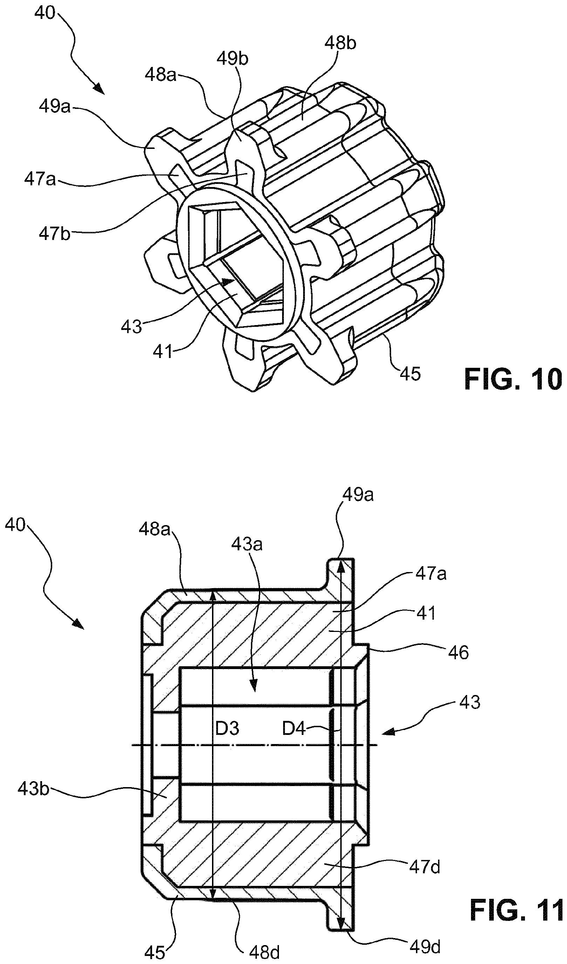

Auf der Nabe 40 (vgl. auch Fig. 10 und 11) ist gemäß diesem ersten Beispiel, welches nicht Teil der Erfindung ist, (Fig. 2) eine Kupplungsbuchse 50 vorgesehen, die einteilig ausgebildet ist. Die Kupplungsbuchse 50 weist einen Abtriebsabschnitt 52 auf, der in diesem Ausführungsbeispiel punktuell reibschlüssig zum Übertragen von Drehmomenten mit der Innenumfangsfläche 12 des Rollenkörpers verbunden ist. Zu diesem Zweck weist die Kupplungsbuchse 50 eine Mehrzahl an radialen Nasen 54 auf, die mit der Innenumfangsfläche 12 in Kontakt stehen.

Genauer gesagt definieren die Nasen 54 gemeinsam einen Durchmesser D1, der etwas größer ist als der Durchmesser D2, der der Innendurchmesser des Rollenkörpers 2 ist. Die einzelnen Nasen 54 sind leicht federnd ausgebildet, sodass sich diese elastisch verformen lassen, insbesondere so, dass der Durchmesser D1 verringert wird. Auf diese Weise lässt sich die Kupplungsbuchse 50 axial in dem Innenraum 14 des Rollenkörpers 2 anordnen, wobei die Nasen 54 elastisch eine radiale Kraft auf die Innenumfangsfläche 12 ausüben, sodass eine reibschlüssige Verbindung zwischen Kupplungsbuchse 50 und Rollenkörper 2 erreicht ist.

Die Kupplungsbuchse 50 weist gemäß diesem Beispiel ferner einen Steg 56 auf, der sich radial an einem axialen Ende des Abtriebsabschnitts 52 erstreckt, aber einen Durchmesser aufweist, der kleiner ist als der Durchmesser D2. Der Steg 56 dient nicht zur Drehmomentenübertragung, sondern allein zur Positionierung der Kupplungsbuchse 50.

In Fig. 3 ist eine Ausführungsform der Erfindung gezeigt. Gleiche und ähnliche Elemente sind mit gleichen Bezugszeichen versehen, und insofern wird vollumfänglich auf die obige Beschreibung zu Fig. 2 und 1 Bezug genommen.

Fig. 3 stellt ebenfalls den Ausbruch B aus Fig. 1 dar, wobei in diesem Fall eine andere Kupplungsbuchse 50 eingesetzt ist.

Die Kupplungsbuchse 50 sitzt auf der Nabe 40, die wiederum wie die Nabe 40 gemäß dem ersten Beispiel (Fig. 2) mit radialen Vorsprüngen 48c, 48d versehen ist. Gemäß diesem Ausführungsbeispiel (Fig. 3) ist die Kupplungsbuchse 50 zweiteilig und wird mit Bezug auf die Fig. 10 und 11 näher erläutert werden. Die Kupplungsbuchse 50 weist in diesem Ausführungsbeispiel ein radial äußeres Teil 60 und ein radial inneres Teil 62 auf, wobei das radial innere Teil 62 aus einem nachgiebigen Material, insbesondere einem Kunststoff oder Elastomer gebildet ist. Das äußere Teil 60 weist den Abtriebsabschnitt 52 auf, der gemäß diesem Ausführungsbeispiel als sich axial erstreckender Kragen ausgebildet ist. Der Kragen 64 des Abtriebsabschnitts 52 ist aus einem dünnwandigen Blechmaterial gebildet, das insbesondere eine geringere Stärke als der Rollenkörper 2 aufweist. Gemäß diesem Ausführungsbeispiel ist die Stärke des Kragens 64 in etwa die Hälfte von der Stärke des Rollenkörpers 2, insbesondere 40 %, 30 % oder weniger.

In diesem Ausführungsbeispiel ist die Kupplungsbuchse 50 über eine stoffschlüssige Verbindung mit dem Rollenkörper 2 verbunden. Dazu sind mehrere Schweißpunkte 66a, 66b vorgesehen, die den Kragen 64 mit der Innenumfangsfläche 12 des Rollenkörpers 2 verbinden. Die einzelnen Schweißpunkte 66a, 66b können einerseits, wie beim Schweißpunkt 66a gezeigt, axial leicht versetzt von einem axialen Stirnende des Kragens 64 ausgebildet sein oder direkt am axialen Ende, wie bei Schweißpunkt 66b gezeigt. Auf diese Weise lassen sich Fertigungstoleranzen und Fertigungsungenauigkeiten des Kragens 64 und des Rollenkörpers 2 ausgleichen. Der Kragen 64 ist aus einem verhältnismäßig dünnen Blechmaterial gebildet und lässt sich so auch radial leicht zusammenstauchen. Hierdurch wird das Einsetzen der Kupplungsbuchse 50, auch bei einem leichten Übermaß des Kragens 64 gegenüber dem Durchmesser des Rollenkörpers 2, ermöglicht. Da aber der Kragen 64 aus einem relativ dünnen Blechmaterial ist, ist dieser nicht in der Lage, eine ausreichende kraftschlüssige Pressverbindung zwischen der Kupplungsbuchse 50 und dem Rollenkörper 2 zu bieten. Zur Übertragung von Drehmomenten ist daher der Kragen 64 stoffschlüssig an einer Mehrzahl an einzelnen Schweißpunkten mit dem Rollenkörper 2 verbunden.

Um die Schweißpunkte zu erzeugen, wird vorzugsweise eine Laservorrichtung von außen am Rohrende positioniert und zur Schweißung wird der Laserstrahl an den gewünschten Stellen innerhalb im Rohr fokussiert, um die zu verbindenden Bauteile punktuell aufzuschmelzen.

Es soll verstanden werden, dass das Beispiel der Fig. 2 und das Ausführungsbeispiel der Fig. 3 auch kombiniert werden können und nur ihre Struktur zunächst in den Fig. 2 und 3 verschiedene Alternativen darstellen. Es ist ebenso bevorzugt, die einzelnen Nasen 54 über Schweißpunkte 66a, 66b zusätzlich mit der Innenumfangsfläche 12 des Rollenkörpers 2 zu verbinden, um so eine noch effektivere Drehmomentenübertragung zu erreichen.

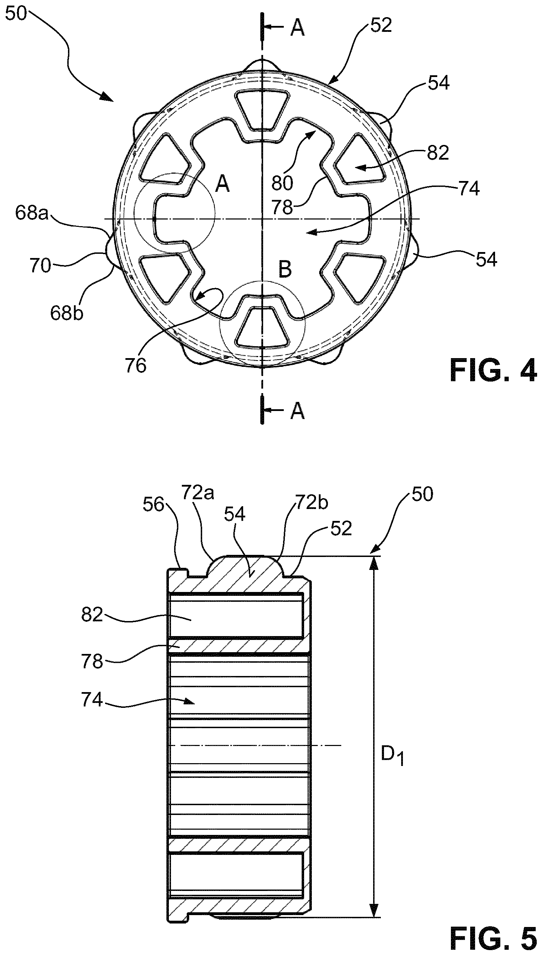

In den Fig. 4 bis 13 werden die Kupplungsbuchsen 50 gemäß den verschiedenen Beispielen und Ausführungsbeispielen separat dargestellt und näher erläutert.

Fig. 4 zeigt zunächst eine Kupplungsbuchse 50, wie sie grundsätzlich auch in dem Beispiel gemäß den Fig. 1 und 2 eingebaut ist. Fig. 5 zeigt den Querschnitt A-A aus Fig. 4, und im Folgenden wird auf beide Figuren gleichermaßen eingegangen.

Wie bereits mit Bezug auf Fig. 2 beschrieben, weist die Kupplungsbuchse 50 einen Abtriebsabschnitt 52 und eine Mehrzahl darauf angeordneter radialer Nasen 54 auf. Gemäß diesem Ausführungsbeispiel sind insgesamt sieben Nasen 54 (in Fig. 4 nur zwei mit Bezugszeichen versehen) gleichmäßig um den Umfang verteilt vorgesehen. Die Nasen 54 definieren gemeinsam einen Durchmesser D1 (siehe Fig. 5), der leicht größer ist als der Durchmesser D2 des Rollenkörpers 2. Die Nasen 54 weisen im Querschnitt (vgl. Fig. 4) ein balliges Profil auf und weisen zwei im Wesentlichen flache Flanken 68a, 68b auf sowie eine runde Kuppe 70. Aufgrund dieser Gestaltung sind die Nasen 54 insgesamt etwas elastisch, indem sie sich durch radiale Kompression in Umfangsrichtung ausdehnen können. Hierdurch ist es möglich, Toleranzen auszugleichen und dennoch eine gute reibschlüssige Verbindung zwischen der Kupplungsbuchse 50 und dem Rollenkörper 2 herzustellen.

In axialer Richtung weisen die Nasen 54 ebenfalls ballige Einführflächen 72a, 72b auf, sodass ein Fügen der Kupplungsbuchse 50 in axialer Richtung in den Innenraum 14 des Rollenkörpers 2 einfach möglich ist.

Radial innerlich weist die Kupplungsbuchse 50 eine zentrale Ausnehmung 74 auf, die als Durchgangsausnehmung ausgebildet ist. Mittels dieser Ausnehmung 74 lässt sich die Kupplungsbuchse 50 auf die Nabe 40 in axiale Richtung aufschieben. Die innere Umfangsfläche 76 der zentralen Ausnehmung 74 weist eine Kontur auf, die eine formschlüssige Verbindung in Drehrichtung zwischen der Nabe 40 und der Kupplungsbuchse 50 erlaubt. Dazu sind an der zentralen Ausnehmung 74 eine Mehrzahl an Vorsprüngen 78 und Ausnehmungen 80 vorgesehen (in Fig. 4 nur jeweils eine mit Bezugszeichen versehen), die sich wechselseitig gleichmäßig verteilt um den Umfang der zentralen Ausnehmung 74 verteilen.

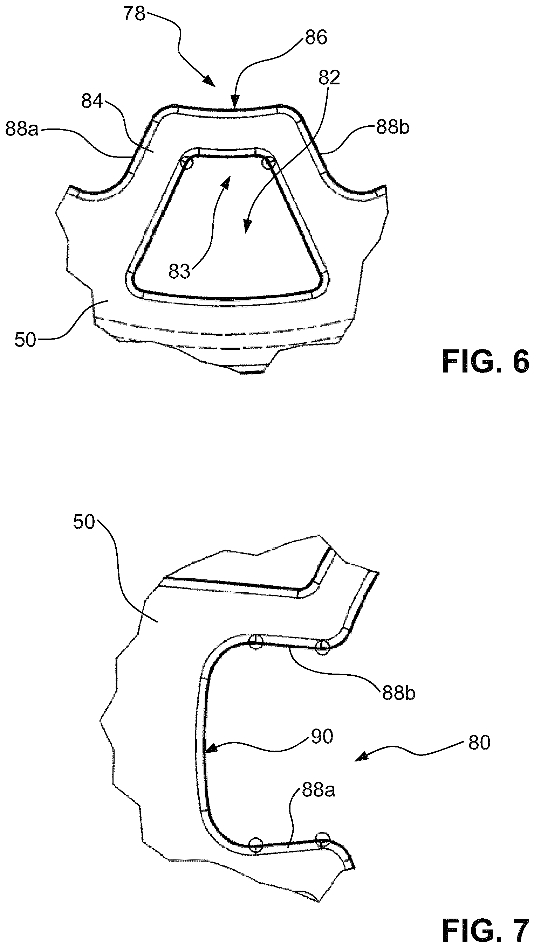

Im Bereich der Vorsprünge 78 sind gemäß diesem Ausführungsbeispiel axiale Ausnehmungen 82 vorgesehen (vgl. Fig. 6). Diese axialen Ausnehmungen 82 weisen im Querschnitt senkrecht zur Rotationsachse der Kupplungsbuchse 50 (also in der Zeichenebene gemäß Fig. 6) eine im Wesentlichen trapezförmige Form auf. Ihre Spitze 83 entspricht im Wesentlichen der Kontur des Vorsprungs 78, sodass eine Wand 84, die die axiale Ausnehmung 82 von der zentralen Ausnehmung 74 im Bereich der Vorsprünge 78 trennt, eine im Wesentlichen konstante Wandstärke aufweist.

Die Vorsprünge 78 weisen radial innerlich an den Spitzen eine konkave Kontur 86 auf.

Die seitlichen Flanken 88a, 88b der Vorsprünge 78 sind im Wesentlichen radial ausgerichtet. Dies hat zur Folge, dass die Ausnehmungen 80 sich nach radial außen leicht aufweiten und in einen konkav geformten Boden 90 münden. Insbesondere die radiale Ausrichtung der seitlichen Flanken 88a, 88b führt dazu, dass die radialen Vorsprünge 48a, 48b auf der Nabe 40 plan mit den Flanken 88a, 88b in Anlage kommen und eine Kraft von den Vorsprüngen 48a, 48b im Wesentlichen senkrecht auf die Flanken 88a, 88b wirkt.

Die axialen Ausnehmungen 82 führen einerseits zu einer Gewichtsreduktion, andererseits dienen diese explizit der leicht elastischen Ausbildung der Vorsprünge 78, die zur Abfederung von Ruck und anderen Belastungsspitzen dient.

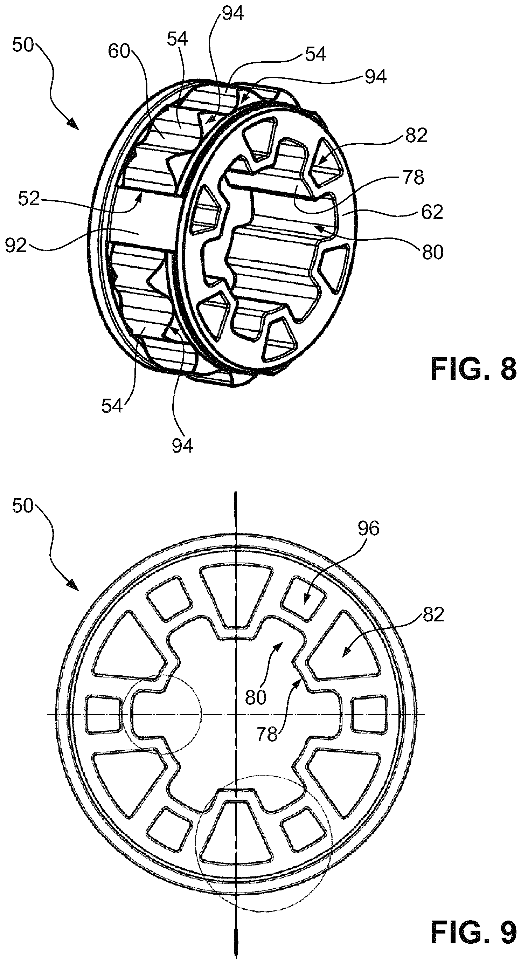

Die Fig. 8 und 9 illustrieren ein zweites Ausführungsbeispiel, das allerdings dem ersten Beispielähnelt. Gemäß dem zweiten Ausführungsbeispiel (Fig. 8 und 9) ist die Kupplungsbuchse 50 zweiteilig gebildet. Sie weist ein radial inneres Teil 62 und ein radial äußeres Teil 60 auf, welches den Abtriebsabschnitt 52 bildet.

Das innere Teil 62 weist eine im Wesentlichen zylindrische Umfangsfläche 92 auf, auf der das äußere Teil 60 in Form eines gewellten Blechstreifens aufgebracht ist. Der gewellte Blechstreifen des äußeren Teils 60 bildet eine Mehrzahl an Nasen 54, die in dieser Ausführungsform dann hohl sind und im Inneren einen Hohlraum 94 definieren. Hierdurch ist die Elastizität der Nasen 54 weitergebildet, und Fertigungstoleranzen können noch effektiver ausgeglichen werden.

Fig. 9 zeigt ein demgegenüber leicht verändertes Ausführungsbeispiel, bei dem nicht nur trapezförmige Ausnehmungen 82 im Bereich der Vorsprünge 78 ausgebildet sind, sondern zusätzlich im Wesentlichen rechteckige axiale Ausnehmungen 96 im Bereich der Ausnehmungen 80. Dies führt weiter zu Gewichtsreduktion und auch zur weiteren elastischen Ausbildung der Kupplungsbuchse 50.

Eine Nabe 40, wie sie mit den Kupplungsbuchsen 50 gemäß der beschriebenen Ausführungsbeispiele aus den Figuren 2, und 4 bis 9 verwendet werden kann, wird nun genauer mit Bezug auf die Figuren 10 und 11 beschrieben. Die Nabe 40 gemäß der Figuren 10 und 11 weist einen inneren Nabenteil 41 auf, der vorzugsweise aus einem im Wesentlichen starren Material, wie insbesondere verschleißfester Kunststoff wie z.B. Polyamid, gebildet ist. Der innere Nabenteil 41 weist eine zentrale Ausnehmung 43 auf, über die die Nabe 40 mit dem entsprechenden Abschnitt der Abtriebswelle 26 verbindbar ist. Die zentrale Ausnehmung 43 weist einen ersten Abschnitt 43a mit einem Innenmehrkant, und einen Anschlagring 43b auf. Der Innenmehrkant kooperiert mit dem entsprechenden Außenmehrkant der Abtriebswelle 26 zur Drehmomentübertragung. Der Abschlagring 43b dient zur axialen Positionierung.

Die Nabe 40 weist weiterhin einen äußeren Teil 45 auf, der den inneren Teil 41 radial und umfänglich umschließt und vorzugsweise aus einem nachgiebigen Material, wie insbesondere einem Elastomermaterial gebildet ist. Der äußere Teil 41 definiert die Vorsprünge 48a, 48b, 48c, 48d (in den Figuren 10 und 11 sind nicht alle Vorsprünge mit einem Bezugszeichen versehen). Innerlich sind die Vorsprünge 48a, 48b, 48c, 48d jeweils durch einen Steg 47a, 47b, 47d gestützt, der an dem inneren Teil 41 angeformt ist und sich von diesem radial erstreckt. Die Stege 47a, 47b, 47d bieten eine Verstärkung der Vorsprünge 48a, 48b, 48c, 48d.

An einem ersten axialen Ende weisen die Vorsprünge 48a, 48b, 48c, 48d jeweils eine radiale Zunge 49a, 49b, 49d auf, die gemeinsam einen Kragen definieren, der einen in Bezug auf den Durchmesser D₃ der Vorsprünge 48a, 48b, 48c, 48d vergrößerten Durchmesser D₄ hat. Der Zweck der Zungen 49a, 49b, 49d liegt darin ein "Herauswandern" der Nabe 40 im Betrieb zu verhindern, wenn diese nicht durch eine Schraube 42 gesichert ist. Die Nabe 40 wird mit dem Abschnitt 43a auf der Abtriebswelle 26 angeordnet. Die Kupplungsbuchse 50 wird anschließend aufgeschoben und liegt dann mit ihrer dem Antrieb zugewandten Stirnseite an den Zungen 49a, 49b, 49d an. Antrieb und Kupplungsbuchse 50 sind ihrerseits axial fixiert; der Antrieb über die Endkappe 4 und die Kupplungsbuchse 50 über ihre Verbindung zum Rollenkörper 2. Dadurch ist dann auch die Nabe 40 axial festgelegt, und ein "Herauswandern" verhindert, obwohl sie eine Loslagerung aufweist und nicht durch eine Schraube 42 geklemmt ist.

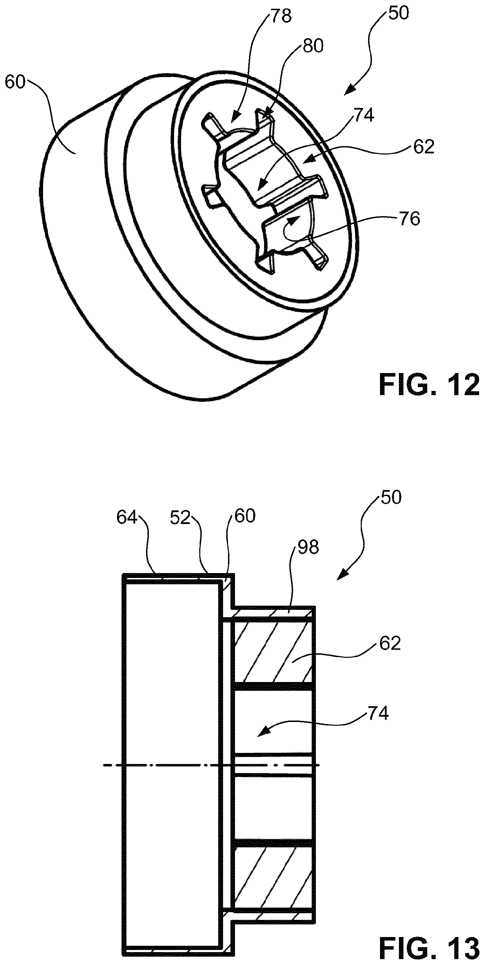

Die Fig. 12 und 13 illustrieren eine weitere Ausführungsform der Kupplungsbuchse, wie sie in Fig. 3 dargestellt ist. Die Kupplungsbuchse gemäß den Fig. 12 und 13 ist wiederum zweiteilig und weist ein inneres Teil 62 sowie ein äußeres Teil 60 auf. Das innere Teil 62 ist aus einem Kunststoff oder Elastomermaterial, um einen Ruck oder andere Lastspitzen auszugleichen. Der Abtriebsabschnitt 52 ist hier, wie dies bereits mit Bezug auf Fig. 3 beschrieben wurde, als Kragen 64 ausgebildet, der sich von einem das innere Teil 62 ummantelnden Abschnitt 98 weg erstreckt. Während der Abschnitt 98 eine radial äußere Hülle für das flexible innere Teil 62 bildet, ist der Kragen 64 aus einem relativ dünnen Blechmaterial gebildet, welches sich gut mittels Punktschweißen mit dem Rollenkörper 2 verbinden lässt. Die axiale Erstreckung des Kragens 64 dient einerseits dazu, den Kragen 64 flexibel zu halten, um ihn sowohl radial aufweiten als auch radial verkleinern zu können, um Fertigungstoleranzen auszugleichen. Andererseits wird hierdurch auch eine räumliche Distanz zwischen den Schweißpunkten und dem inneren Teil 62 bereitgestellt, um eine Erwärmung des flexiblen inneren Teils 62 zu vermeiden. Die Verwendung von Lase-Punkt-Schweißen steigert diesen Effekt zusätzlich.

Das innere Teil 62 weist, entsprechend den ersten Ausführungsbeispielen, eine zentrale Ausnehmung 74 auf, die eine Innenkontur 76 aufweist, die in etwa sternförmig ist. Auch diese Kontur 76 weist Vorsprünge 78 und Ausnehmungen 80 auf, die umfänglich gleichermaßen verteilt sind. Die sich abwechselnden Ausnehmungen 80 und Vorsprünge 78 dienen dazu, eine formschlüssige Kraftübertragung und Drehmomentenübertragung von der Nabe 40 auf die Kupplungsbuchse 50 zu erlauben.

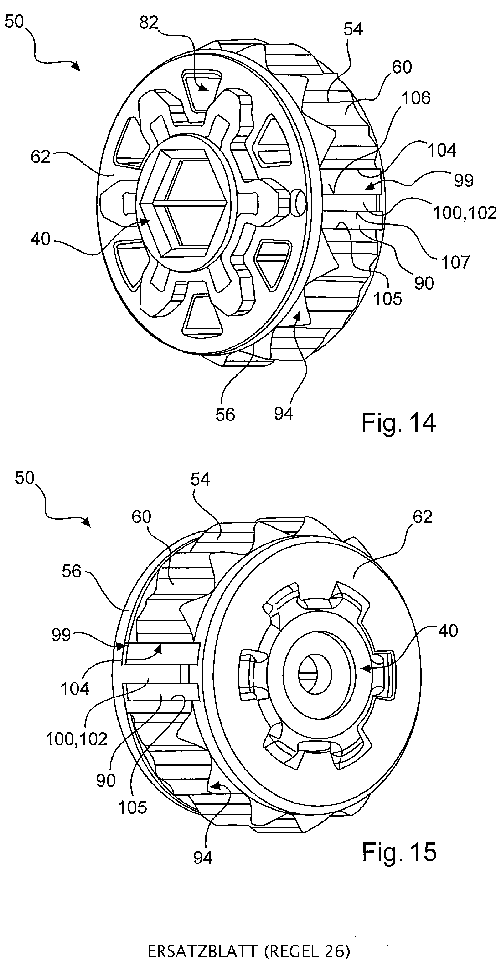

Die Figuren 14 und 15 zeigen ein weiteres Ausführungsbeispiel der Kupplungsbuchse 50. Grundsätzlich ist dieses Ausführungsbeispiel ähnlich zu dem zweiten dritten Ausführungsbeispiel (Fig. 8) und die Kupplungsbuchse 50 ist zweiteilig mit einem radial äußeren Teil 60, welches den Abtriebsabschnitt 52 definiert, und einem radial inneren Teil 62 ausgebildet. Das radial äußere Teil 60 ist wiederum als gewellter Blechstreifen ausgebildet, der auf einer im Wesentlichen zylindrischen Umfangsfläche 92 des radial inneren Teils 62 sitzt.

Der gewellte Blechstreifen weist eine radiale Lücke 99 auf, die durch einen ersten Endabschnitt 104 und einen zweiten Endabschnitt 105 begrenzt ist. Diese Lücke 99 ist auch schon bei dem Blechstreifen des dritten Ausführungsbeispiels (Fig. 8) vorhanden. Sie dient dazu den Blechstreifen leichter an den Durchmesser des radial inneren Teils 62 anzupassen.

Das radial innere Teil 62 weist, wie dies schon aus dem ersten Ausführungsbeispiel (Fig. 5) bekannt ist, einen Steg 56 auf, der einen größeren Durchmesser als die Umfangsfläche 92 aufweist und so zur axialen Positionierung des radial äußeren Teils 60 dient.

Um eine Rotation des radial äußeren Teils 60 gegenüber dem radial inneren Teil 62 zu verhindern ist gemäß diesen Ausführungsbeispielen (Fig. 14, 15) eine Verdrehsicherung 100 vorgesehen. Die Verdrehsicherung 100 weist gemäß diesen Ausführungsbeispielen einen Anschlag 102 auf, gegen den einer der ersten und zweiten Endabschnitte 104, 105 anschlagen kann. Der Anschlag 102 sitzt innerhalb der Lücke 99, hat aber eine umfänglich geringere Ausdehnung, sodass eine gewisse Drehung des radial äußeren Teils 60 bis der erste oder zweite Endabschnitt 104, 105 mit dem Anschlag 102 in Kontakt kommt, erlaubt ist.

Umfängliche Stirnseiten 106, 107 (vgl. Fig. 14) des Anschlags 102 sind radial ausgerichtet, sodass sie eine ebene Anlagefläche für die Endabschnitte 104, 105 bieten. Hierdurch ist ein sicherer Kontakt erhältlich, der ein Lösen und axiales Verschieben des radial äußeren Teils 60 weg von dem Steg 56 verhindern kann. Der Durchmesser bzw. die radiale Erstreckung des Anschlags 102 ist gleich oder geringer als der des Stegs 56, um eine einfache Montage zu ermöglichen.

Anstelle des Anschlags 102 ist aber auch eine rein stoffschlüssige Verdrehsicherung denkbar, indem beispielsweise ein oder mehrere Schweißpunkte zur Verbindung des Blechstreifens mit der Umfangsfläche 90 vorgesehen sind.

In den inneren Durchbruch ist hier zu illustrativen Zwecken die Nabe 40 der Fig. 10 eingesetzt. Die Ausnehmungen 82 sind in diesem Ausführungsbeispiel (Fig. 14, 15) als sacklochartige Vertiefungen ausgebildet, sodass die axiale Stirnseite in Fig. 15 geschlossen erscheint. Hierdurch lässt sich zum einen Material (Masseträgheit / Kosten) einsparen und zum anderen annähernd konstante Wandstärken erreichen, die für Guss-/ Spritzgussteile vorteilhaft sind.

## Patentansprüche

1. Motorbetriebene Förderrolle (1) für Förderanlagen zum Fördern von Behältern, Paletten und dergleichen, mit
- einem Rollenkörper (2), dessen Außenumfangsfläche eine Auflagefläche für Fördergut darstellt,
- einer Antriebseinheit (18), die innerhalb eines Innenraums (14) des Rollenkörpers (2) angeordnet ist,
- einer zur Übertragung eines Drehmoments von der Antriebseinheit (18) auf eine Innenumfangsfläche (12) des Innenraums (14) des Rollenkörpers (2) ausgebildete Kupplungseinheit (30), welche
eine Kupplungsbuchse (50) aufweist, die einen Antriebsabschnitt, der mit der Antriebseinheit (18) in Verbindung steht, und einen äußeren peripheren Abtriebsabschnitt (52) aufweist,
wobei
die Kupplungsbuchse (50) zwei oder mehrteilig ist und ein radial äußeres Teil (60), welches den Abtriebsabschnitt (52) definiert, und ein radial inneres Teil (62) aufweist, welches einen Teil einer Welle-Nabe-Verbindung bildet und mit einer Abtriebswelle (26) des Antriebs verbunden ist,
wobei das radial innere Teil (62) aus einem flexiblen Material, insbesondere einem Elastomermaterial, gebildet ist,
**dadurch gekennzeichnet, dass**
die Kupplungsbuchse (50) nur punktuell reibschlüssig zur Übertragung von Drehmomenten mit der Innenumfangsfläche (12) des Rollenkörpers (2) verbunden ist.

2. Förderrolle nach Anspruch 1, wobei der Abtriebsabschnitt (52) der Kupplungsbuchse (50) eine Mehrzahl an radialen Nasen (54) aufweist, die dazu vorgesehen sind mit der Innenumfangsfläche (12) des Rollenkörpers (2) in Kontakt zu stehen.

3. Förderrolle nach Anspruch 2, wobei die radialen Nasen (54) gemeinsam einen Durchmesser (D1) definieren, der größer ist als der Durchmesser (D2) der Innenumfangsfläche (12).

4. Förderrolle nach Anspruch 3, wobei die Nasen (54) nachgiebig und vorzugsweise innerlich hohl ausgebildet sind.

5. Förderrolle nach einem der vorstehenden Ansprüche, wobei um einen Umfang des Abtriebsabschnitts (52) 3 bis 20, vorzugsweise 5 bis 15, besonders bevorzugt 7 bis 10 separate Verbindungspunkte (54, 66a, 66b) vorgesehen sind, an denen die Kupplungsbuchse (50) punktuell mit der Innenumfangsfläche (12) des Rollenkörpers (2) verbunden ist.

6. Förderrolle nach einem der vorstehenden Ansprüche, wobei das radial äußere Teil (60) als gewellter Blechstreifen ausgebildet ist.

7. Förderrolle nach Anspruch 6, wobei das radiale innere Teil (62) eine im Wesentlichen zylindrische Umfangsfläche (92) aufweist, auf der das äußere Teil (60) aufgesetzt ist.

8. Förderrolle nach einem der vorstehenden Ansprüche, aufweisend eine Verdrehsicherung (100) zum Sichern des radial äußeren Teils (60) gegen Rotation relativ zum radial inneren Teil (62), insbesondere eine formschlüssige Verdrehsicherung, wobei die Verdrehsicherung (100) vorzugsweise als Anschlag (102) ausgebildet ist, gegen den ein umfänglicher Endabschnitt (104, 105) des radial äußeren Teils (60) anschlägt.

9. Förderrolle nach einem der vorstehenden Ansprüche, wobei die Kupplungsbuchse (50) bezogen auf die Antriebseinheit (18) axial verschieblich gelagert ist.

10. Förderrolle nach einem der vorstehenden Ansprüche, wobei die Kupplungsbuchse (50) eine zentrale Ausnehmung (74) aufweist, in die eine Abtriebswelle (26) eingesetzt ist, wobei die zentrale Ausnehmung (74) wechselseitig umfänglich sich radial erstreckende Vorsprünge (78) und Ausnehmungen (80) aufweist,
wobei die Vorsprünge (78) vorzugsweise an den radial innerlichen Spitzen (86) konkav abgeflacht sind und wobei seitliche Flanken (88a, 88b) der radialen Vorsprünge (78) vorzugsweise im Wesentlichen radial ausgerichtet sind.

11. Förderrolle nach Anspruch 10, wobei die Kupplungsbuchse (50) im Bereich der radialen Vorsprünge (78) axiale Ausnehmungen (82) aufweist, wobei die axialen Ausnehmungen (82) vorzugsweise im Querschnitt im Wesentlichen trapezförmig sind.

12. Förderrolle nach einem der vorstehenden Ansprüche, wobei die Kupplungsbuchse (50) einen sich axial erstreckenden Kragen (64) aufweist, an dem der Abtriebsabschnitt (52) ausgebildet ist.

13. Motorbetriebene Förderrolle (1) für Förderanlagen zum Fördern von Behältern, Paletten und dergleichen, mit
- einem Rollenkörper (2), dessen Außenumfangsfläche eine Auflagefläche für Fördergut darstellt,
- einer Antriebseinheit (18), die innerhalb eines Innenraums (14) des Rollenkörpers (2) angeordnet ist,
- einer zur Übertragung eines Drehmoments von der Antriebseinheit (18) auf eine Innenumfangsfläche (12) des Innenraums (14) des Rollenkörpers (2) ausgebildete Kupplungseinheit (30), welche
eine Kupplungsbuchse (50) aufweist, die einen Antriebsabschnitt, der mit der Antriebseinheit (18) in Verbindung steht, und einen äußeren peripheren Abtriebsabschnitt (52) aufweist,
wobei die Kupplungsbuchse (50) nur punktuell stoffschlüssig zur Übertragung von Drehmomenten mit der Innenumfangsfläche (12) des Rollenkörpers (2) verbunden ist,
wobei
die Kupplungsbuchse (50) zwei oder mehrteilig ist und ein radial äußeres Teil (60), welches den Abtriebsabschnitt (52) definiert, und ein radial inneres Teil (62) aufweist, welches einen Teil einer Welle-Nabe-Verbindung bildet und mit einer Abtriebswelle (26) des Antriebs verbunden ist,
wobei die Kupplungsbuchse (50) einen sich axial erstreckenden Kragen (64) aufweist, an dem der Abtriebsabschnitt (52) ausgebildet ist,
**dadurch gekennzeichnet, dass**
sich der Kragen (64) von einem das innere Teil (62) ummantelnden Abschnitt (98) axial weg erstreckt, und nur punktuell stoffschlüssig zur Übertragung von Drehmomenten mit der Innenumfangsfläche (12) des Rollenkörpers (2) verbunden ist.

## Claims

1. A motor-driven conveyor roller (1) for conveyor systems for conveying containers, pallets and the like, with
- a roller body (2), the outer circumferential surface of which constitutes a support surface for conveyed goods,
- a drive unit (18) arranged within an interior (14) of the roller body (2),
- a coupling unit (30) designed for transmitting a torque from the drive unit (18) to an inner circumferential surface (12) of the interior (14) of the roller body (2), which
- has a clutch bushing (50), which has a drive section connected with the drive unit (18) and an outer peripheral output section (52),
wherein
the clutch bushing (50) is of two or more parts, and has a radially outer part (60) that defines the drive section (52) and a radially inner part (62) that forms part of a shaft-hub connection and is connected with an output shaft (26) of the drive,
wherein the radially inner part (62) consists of a flexible material, in particular an elastomer material,
**characterized in that**
the clutch bushing (50) is only frictionally connected at certain points with the inner circumferential surface (12) of the roller body (2) for transmitting torques.

2. The conveyor roller according to claim 1, wherein the output section (52) of the clutch bushing (50) has a plurality of radial noses (54), which are provided for being in contact with the inner circumferential surface (12) of the roller body (2).

3. The conveyor roller according to claim 2, wherein the radial noses (54) together define a diameter (D1) that is larger than the diameter (D2) of the inner circumferential surface (12).

4. The conveyor roller according to claim 3, wherein the noses (54) are flexible and preferably internally hollow in design.

5. The conveyor roller according to one of the preceding claims, wherein 3 to 20, preferably 5 to 15, especially preferably 7 to 10 separate connecting points (54, 66a, 66b) are provided around a circumference of the output section (52), on which the clutch bushing (50) is connected at certain points with the inner circumferential surface (12) of the roller body (2).

6. The conveyor roller according to one of the preceding claims, wherein the radially outer part (60) is designed as a corrugated metal strip.

7. The conveyor roller according to claim 6, wherein the radially inner part (62) has an essentially cylindrical circumferential surface (92), upon which the outer part (60) is placed.

8. The conveyor roller according to one of the preceding claims, having an anti-twist device (100) to secure the radially outer part (60) against rotation relative to the radially inner part (62), in particular a positive locking anti-twist device, wherein the anti-twist device (100) is preferably designed as a stop (102), which is impacted by a circumferential end section (104, 105) of the radially outer part (60).

9. The conveyor roller according to one of the preceding claims, wherein the clutch bushing (50) is axially movably mounted relative to the drive unit (18).

10. The conveyor roller according to one of the preceding claims, wherein the clutch bushing (50) has a central recess (74), in which an output shaft (26) is placed,
wherein the central recess (74) has alternating, radially extending projections (78) and recesses (80) around the circumference,
wherein the projections (78) are preferably concavely flattened on the radially inner tips (86), and wherein lateral flanks (88a, 88b) of the radial projections (78) are preferably essentially radially aligned.

11. The conveyor roller according to claim 10, wherein the clutch bushing (50) has axial recesses (82) in the area of the radial projections (78), wherein the axial recesses (82) preferably have an essentially trapezoidal cross section.

12. The conveyor roller according to one of the preceding claims, wherein the clutch bushing (50) has an axially extending collar (64), on which the output section (52) is formed.

13. A motor-driven conveyor roller (1) for conveyor systems for conveying containers, pallets and the like, with
- a roller body (2), the outer circumferential surface of which constitutes a support surface for conveyed goods,
- a drive unit (18) arranged within an interior (14) of the roller body (2),
- a coupling unit (30) designed for transmitting a torque from the drive unit (18) to an inner circumferential surface (12) of the interior (14) of the roller body (2), which has a clutch bushing (50), which has a drive section connected with the drive unit (18) and an outer peripheral output section (52),
wherein the clutch bushing (50) is only frictionally connected at certain points with the inner circumferential surface (12) of the roller body (2) for transmitting torques.
wherein the clutch bushing (50) consists of two or more parts, and has a radially outer part (60) that defines the drive section (52) and a radially inner part (62) that forms part of a shaft-hub connection and is connected with an output shaft (26) of the drive,
wherein the clutch bushing (50) has an axially extending collar (64) on which the drive section (52) is formed,
**characterized in that**
the collar (64) extends axially away from a section (98) jacketing the inner part (62), and is only bonded at certain points with the inner circumferential surface (12) of the roller body (2) for transmitting torques.

## Revendications

1. Rouleau de convoyage (1) entraîné par moteur, destiné à des systèmes de convoyage pour convoyer des conteneurs, des palettes et analogues, pourvu
- d'un corps de rouleau (2), dont la surface circonférentielle extérieure représente une surface de dépose pour des produits à convoyer,
- d'une unité d'entraînement (18), qui est placée à l'intérieur de l'espace intérieur (14) du corps de rouleau (2),
- d'une unité d'accouplement (30), conçue pour la transmission d'un couple de rotation de l'unité d'entraînement (18) sur une surface circonférentielle intérieure (12) de l'espace intérieur (14) du corps de rouleau (2), laquelle comporte un manchon d'accouplement (50), qui comporte une section d'entraînement, qui est en liaison avec l'unité d'entraînement (18) et qui comporte une section de sortie (52) extérieure périphérique,
le manchon d'accouplement (50) étant en deux ou en plusieurs parties et comportant une partie (60) extérieure en direction radiale, laquelle définit la section de sortie (52) et une partie (62) intérieure en direction radiale, laquelle constitue une partie d'une liaison arbre-moyeu et est reliée avec un arbre de sortie (26) de l'entraînement,
la partie (62) intérieure en direction radiale étant conçue en une matière souple, notamment en une matière élastomère,
**caractérisé en ce que**
le manchon d'accouplement (50) n'est relié que ponctuellement par friction avec la surface circonférentielle intérieure (12) du corps de rouleau (2), pour la transmission de couples de rotation.

2. Rouleau de convoyage selon la revendication 1, la section de sortie (52) du manchon d'accouplement (50) comportant une pluralité d'ergots (54) radiaux qui sont prévus pour être en contact avec la surface circonférentielle intérieure (12) du corps de rouleau (2).

3. Rouleau de convoyage selon la revendication 2, les ergots (54) radiaux définissant en commun un diamètre (D1) qui est supérieur au diamètre (D2) de la surface circonférentielle intérieure (12).

4. Rouleau de convoyage selon la revendication 3, les ergots (54) étant conçus en étant souples et de préférence à intérieur creux.

5. Rouleau de convoyage selon l'une quelconque des revendications précédentes, autour d'une circonférence de la section de sortie (52) étant prévus de 3 à 20, de préférence de 5 à 15, de manière particulièrement préférentielle de 7 à 10 points de liaison (54, 66a, 66b) séparés, sur lesquels le manchon d'accouplement (50) est relié ponctuellement avec la surface circonférentielle intérieure (12) du corps de rouleau (2).

6. Rouleau de convoyage selon l'une quelconque des revendications précédentes, la partie (60) extérieure en direction radiale étant conçue sous la forme d'un ruban de tôle ondulé.

7. Rouleau de convoyage selon la revendication 6, la partie (62) intérieure en direction radiale comportant une surface circonférentielle (92) sensiblement cylindrique, sur laquelle est posée la partie (60) extérieure.

8. Rouleau de convoyage selon l'une quelconque des revendications précédentes, comportant un blocage anti-rotation (100), destiné à bloquer la partie (60) extérieure en direction radiale contre une rotation par rapport à la partie (62) intérieure en direction radiale, notamment un blocage anti-rotation par complémentarité de forme, le blocage anti-rotation (100) étant conçu de préférence sous la forme d'une butée (102), contre laquelle bute une section d'extrémité (104, 105) circonférentielle de la partie (60) extérieure en direction radiale.

9. Rouleau de convoyage selon l'une quelconque des revendications précédentes, le manchon d'accouplement (50) étant logé de manière déplaçable en direction axiale, en rapport à l'unité d'entraînement (18).

10. Rouleau de convoyage selon l'une quelconque des revendications précédentes, le manchon d'accouplement (50) comportant un évidement (74) central, dans lequel est inséré un arbre de sortie (26),
l'évidement (74) central comportant des saillies (78) et des évidements (80) s'étendant réciproquement en direction radiale sur la circonférence,
les saillies (78) étant aplaties de forme concave de préférence sur les pointes (86) intérieures en direction radiale et des flancs (88a, 88b) latéraux des saillies (78) radiales étant orientés de préférence sensiblement en direction radiale.

11. Rouleau de convoyage selon la revendication 10, le manchon d'accouplement (50) comportant dans la zone des saillies (78) radiales des évidements (82) axiaux, les évidements (82) axiaux étant de préférence de forme sensiblement trapézoïdale dans leur section transversale.

12. Rouleau de convoyage selon l'une quelconque des revendications précédentes, le manchon d'accouplement (50) comportant une collerette (64) s'étendant en direction axiale, sur laquelle est conçue la section de sortie (52).

13. Rouleau de convoyage (1) entraîné par moteur, destiné à des systèmes de convoyage pour convoyer des conteneurs, des palettes et analogues, pourvu
- d'un corps de rouleau (2), dont la surface circonférentielle extérieure représente une surface de dépose pour des produits à convoyer,
- d'une unité d'entraînement (18), qui est placée à l'intérieur de l'espace intérieur (14) du corps de rouleau (2),
- d'une unité d'accouplement (30), conçue pour la transmission d'un couple de rotation de l'unité d'entraînement (18) sur une surface circonférentielle intérieure (12) de l'espace intérieur (14) du corps de rouleau (2), laquelle comporte un manchon d'accouplement (50), qui comporte une section d'entraînement, qui est en liaison avec l'unité d'entraînement (18) et qui comporte une section de sortie (52) extérieure périphérique,
le manchon d'accouplement (50) n'étant relié que ponctuellement par conjugaison de matières pour la transmission de couples de rotation avec la surface circonférentielle intérieure (12) du corps de rouleau (2),
le manchon d'accouplement (50) étant en deux ou en plusieurs parties et comportant une partie (60) extérieure en direction radiale, laquelle définit la section de sortie (52) et une partie (62) intérieure en direction radiale, laquelle constitue une partie d'une liaison arbre-moyeu et est reliée avec un arbre de sortie (26) de l'entraînement,
le manchon d'accouplement (50) comportant une collerette (64) s'étendant en direction axiale, sur laquelle est conçue la section de sortie (52,
**caractérisé en ce que**
la collerette (64) s'étend en s'éloignant en direction axiale d'une section (98) enveloppant la partie (62) intérieure et n'est reliée que ponctuellement par conjugaison de matières pour la transmission de couples de rotation avec la surface circonférentielle intérieure (12) du corps de rouleau (2).
